# EUROPEAN PATENT APPLICATION

(11) **EP 2 463 744 A1**
(43) Date of publication of application: **13.06.2012**
(21) Application number: 10194745.5
(22) Date of filing: 13.12.2010
(51) Int. Cl.: G06F 1/16

(54) **A portable electronic communication device**

(71) Applicant: Research In Motion Limited, Waterloo, ON N2L 3W8 (CA)
(72) Inventor: Pegg, Albert, Waterloo Ontario N2L 3W8 (CA)
(74) Representative: Fennell, Gareth Charles

(57) **Abstract**

A portable electronic device includes a housing having a front, an end wall and a sidewall, and a display at a front of the housing. A first input device is moveable from a storage position within the housing to a use position in which the first input device extends from an end wall of the housing. A first push-push mechanism is coupled to the housing and the first input device for moving the first input device between the storage position and the use position. A second input device is moveable from a storage position within the housing to a use position in which the second input device extends from a sidewall of the housing. A second push-push mechanism is coupled to the housing and the second input device for moving the first input device between the storage position and the use position.

## Description

### FIELD OF TECHNOLOGY

The present disclosure relates to a portable electronic device.

### BACKGROUND

Electronic devices, including portable electronic devices, have gained widespread use and may provide a variety of functions including, for example, telephonic, electronic messaging and other personal information manager (PIM) application functions. Portable electronic communication devices include several types of devices including mobile stations such as simple cellular phones and smart phones.

Portable electronic devices such as smart phones are generally intended for handheld use and ease of portability. Smaller devices are generally desirable for portability. Touch-sensitive devices constructed of a display, such as a liquid crystal display (LCD) with a touch sensitive overlay are useful on such portable electronic devices as such portable electronic devices are small and are therefore limited in space available for user input and output devices. Further, the screen content on the touch-sensitive devices can be modified depending on the functions and operations being performed.

### SUMMARY

According to one aspect, a portable electronic device includes a housing and a touch-sensitive display framed by the housing. A first input device is moveable from a storage position within the housing to a use position in which the first input device extends from an end wall of the housing, by actuation of a first push-push mechanism. A second input device is moveable from a storage position within the housing to a use position in which the second input device extends from a sidewall of the housing, by actuation of a second push-push mechanism. A processor is operatively coupled to the touch-sensitive display, the first input device, and the second input device.

### BRIEF DESCRIPTION OF THE DRAWINGS

Embodiments of the present disclosure will now be described, by way of example only, with reference to the attached Figures, wherein:

FIG. 1 is a simplified block diagram of components including internal components of a portable electronic device according to an embodiment;

FIG. 2 is a perspective view of an embodiment of a portable electronic device including a first input device and a second input device in a storage position;

FIG. 3 is a perspective view of the portable electronic device of FIG. 2, with the first input device in a use position;

FIG. 4 is a top view of an example of the first input device assembly with the housing removed for the purpose of illustration;

FIG. 5 is a top view of an example of the first input device assembly, with the housing removed for the purpose of illustration;

FIG. 6 is a perspective view of the portable electronic device of FIG. 2, with the second input device in a use position;

FIG. 7 is a perspective view of the portable electronic device of FIG. 2, with both the first input device and the second input device in use positions;

### DETAILED DESCRIPTION

The following describes a portable electronic device that includes a housing having a front, an end wall, and a sidewall, and a display at a front of the housing. A first input device is moveable from a storage position within the housing to a use position in which the first input device extends from an end wall of the housing. A first push-push mechanism is coupled to the housing and the first input device for moving the first input device between the storage position and the use position. A second input device is moveable from a storage position within the housing to a use position in which the second input device extends from a sidewall of the housing. A second push-push mechanism is coupled to the housing and the first input device for moving the second input device between the storage position and the use position.

For simplicity and clarity of illustration, reference numerals may be repeated among the figures to indicate corresponding or analogous elements. Numerous specific details are set forth to provide a thorough understanding of the embodiments described herein. The embodiments may be practiced without these specific details. In other instances, well-known methods, procedures, and components have not been described in detail so as not to obscure the embodiments described herein. The description is not to be considered as limited to the scope of the embodiments described herein.

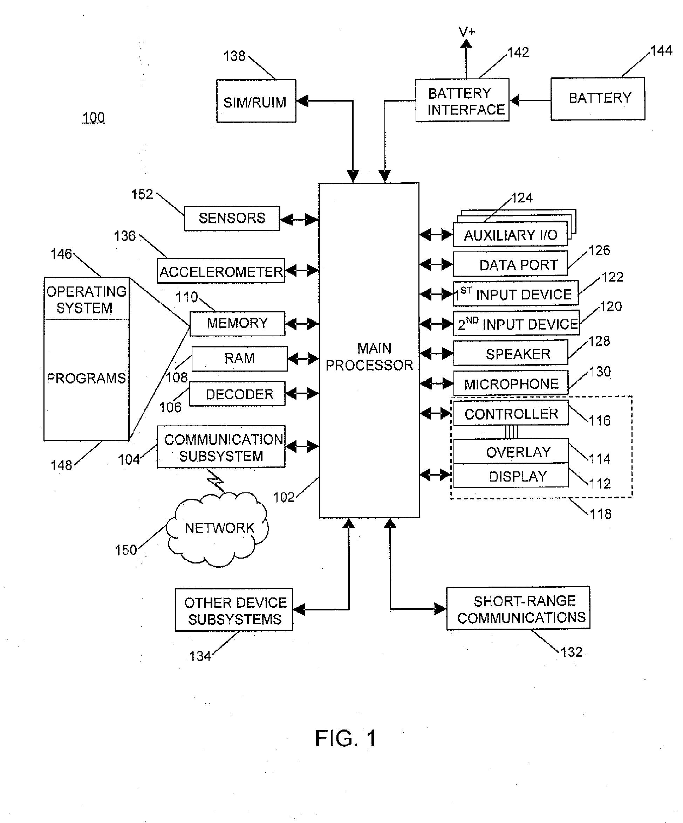

Referring to FIG. 1, a block diagram of components of a portable electronic device 100 is shown. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and dual-mode networks that support both voice and data communications. The portable electronic device 100 is a battery-powered device and includes a battery interface 142 for receiving one or more rechargeable batteries 144.

The processor 102 interacts with other devices, such as a decoder 106, a Random Access Memory (RAM) 108, memory 110, a display 112 with an optional touch-sensitive overlay 114 operably connected to an electronic controller 116 that together comprise a touch-sensitive display 118, a first input device 120, a second input device 122, an auxiliary input/output (I/O) subsystem 124, a data port 126, a speaker 128, a microphone 130, short-range communications 132, other device subsystems 134, and sensors 152. User-interaction with a graphical user interface may be performed through the touch-sensitive overlay 114, the first input device 120, and the second input device 122. The processor 102 interact with the touch-sensitive overlay 114 via the electronic controller 116. information, such as text, characters, symbols, images, icons, and other items that may be displayed or rendered on the portable electronic device 100, is displayed on the touch-sensitive display 118 via the processor 102. The processor 102 may also interact with an accelerometer 136 that may be utilized to detect direction of gravitational forces or gravity-induced reaction forces. The accelerometer 136 may include a cantilever beam with a proof mass and suitable deflection sensing circuitry. Although the touch-sensitive display 118 is described as comprising a display 112 and an overlay 114, the touch-sensitive components may overlay the display 112, or alternatively, may be integrated into the display.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 also includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

In use, a received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

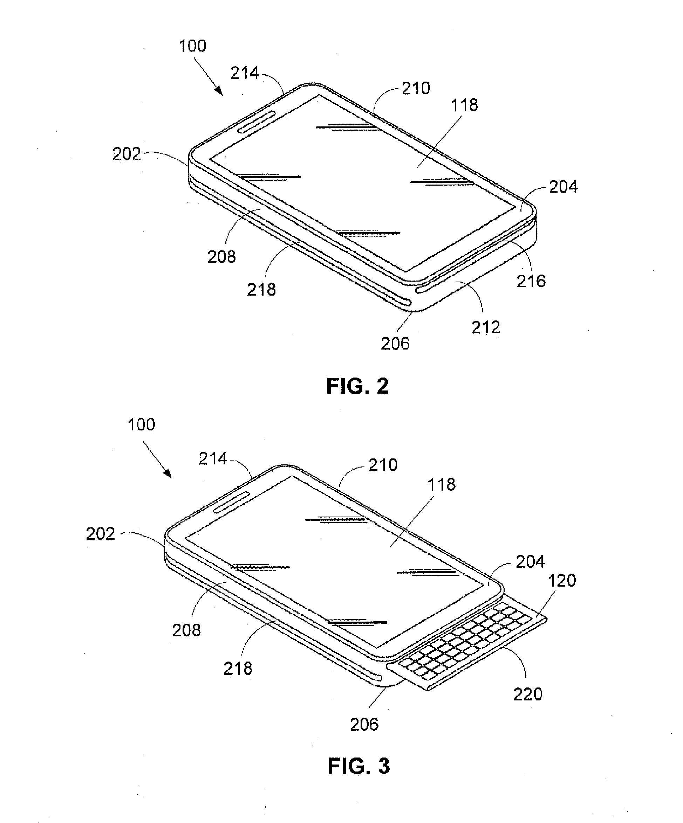

Referring to FIG. 2, a perspective view of an example of the portable electronic device 100 is shown. The portable electronic device 100 generally includes a housing 202 and the touch-sensitive display 118. The housing 202 includes a front 204, a back 206, a pair of opposing sidewalls 208, 210 that extend between the front 204 and the back 206 of the housing 202, and a pair of opposing end walls 212, 214 that extend between the sidewalls 208, 210. The pair of opposing end walls 212, 214 also extend between the front 204 and the back 206 of the housing 202. The touch-sensitive display 118 is located within a recess (not shown) defined in the front 204 of the portable electronic device 100. The back 206 of the housing 202 includes an opening that may be covered by a plate (not shown) that is releasably attachable to the back 206 for insertion and removal of, for example, the SIM/RUIM card 138.

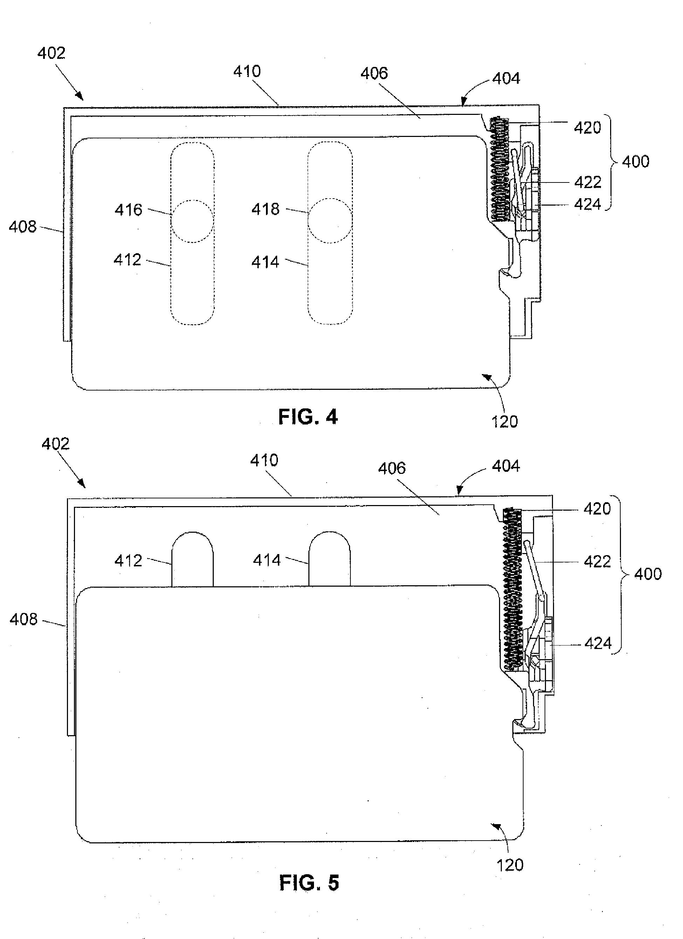

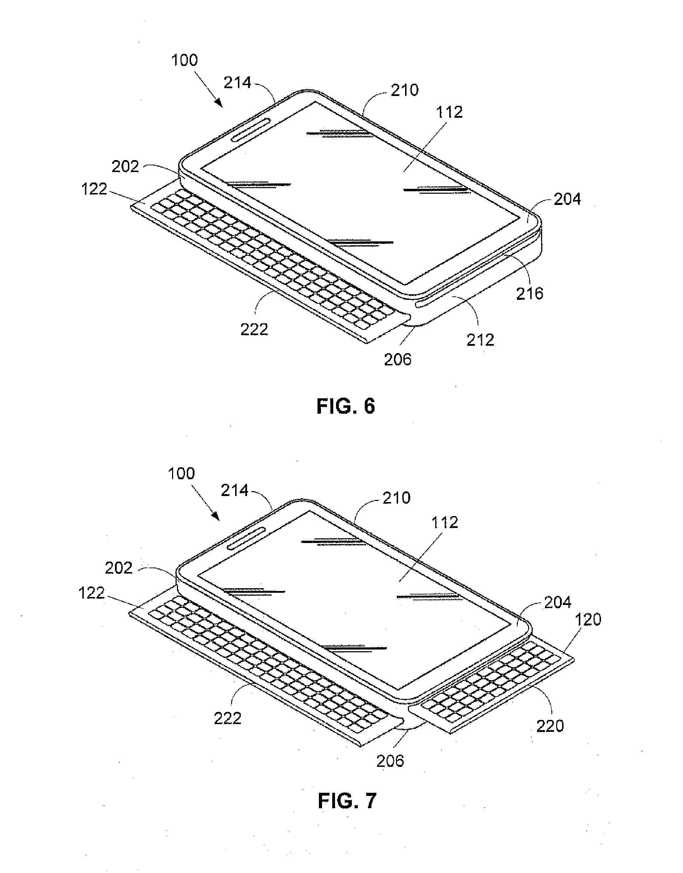

The first input device 120 (FIG. 3), which is part of a first input device assembly 402 described further below, is housed within the housing 202. The second input device 122 (FIG. 6), which is part of a second input device assembly (not shown), is also housed within the housing 202. In the example of the portable electronic device 100 shown in FIG. 3 and FIG. 4, the first input device 120 may be, for example, a keyboard, or a touch-sensitive input device, such as a resistive or capacitive touch panel. The keyboard may be a full keyboard in which each alphabetical character is associated with a respective key of the keyboard. The full keyboard may be, for example, a QWERTY keyboard, a QWERTZ keyboard, or an AZERTY keyboard. Alternatively, the keyboard may be a reduced keyboard in which a plurality of alphabetical characters is associated with a respective key of the keyboard. Alternatively, the keyboard may be a numeric keypad. Optionally, the first input device 120 may include a numeric keypad in addition to a keyboard. Optionally, the first input device 120 may include media inputs or input keys that are associated with functions of the portable device 100.

The second input device 122 may also be, for example, a keyboard, or a touch-sensitive input device, such as a resistive or capacitive touch panel. The keyboard may be a full keyboard in which each alphabetical character is associated with a respective key of the mechanical keyboard. The full keyboard may be, for example, a QWERTY keyboard, a QWERTZ keyboard, or an AZERTY keyboard. Alternatively, the keyboard may be a reduced keyboard in which a plurality of alphabetical characters is associated with a respective key of the mechanical keyboard. Alternatively, the keyboard may be a numeric keypad. Optionally, the second input device 122 may include a numeric keypad in addition to a keyboard. Optionally, the second input device 122 may include media inputs or input keys that are associated with functions of the portable device 100.

The end wall 212 of the housing 202 defines a slot 216 that extends substantially the length of the end wall 212. An end 220 of the first input device 120 is exposed by the slot 216. The sidewall 208 of the housing 202 also defines a slot 218 that extends substantially the length of the sidewall 208. An end 222 of the second input device 122 is exposed by the slot 218.

Components of the portable electronic device 100, including the internal components described and shown in FIG. 1, are housed in the housing 202.

The first input device 120 is shown in a storage position in FIG. 2. The second input device 122 is also shown in a storage position in FIG. 2. When the first input device 120 and the second input device 122 are both in the storage position, the first input device 120 is disposed between the touch-sensitive display 118 and the second input device 122. The second input device 122 is disposed below the first input device 120, between the first input device 120 and the back 206 of the portable electronic device 100. The first input device 120 and the second input device 122 lie in planes that are generally parallel to each other.

In an alternative configuration, the first input device 120 and the second input device 122 may be adjacent to one another.

The first input device 120 is retained within the housing 202 by a first push-push mechanism 400 (FIG. 4). The first input device 120 is moveable from the storage position within the housing 202 (shown in FIG. 2) to a use position in which the first input device 120 extends from the end wall 212 of the housing 202 (shown in FIG. 3) by actuation of the first push-push mechanism 400 (FIG. 4). The second input device 122 is retained within the housing 202 by a second push-push mechanism (not shown). The second input device 122 is moveable from the storage position within the housing 202 (shown in FIG. 2) to a use position in which the second input device 122 extends from the side wall 208 of the housing 202 (shown in FIG. 5) by actuation of the second push-push mechanism (not shown).

A push-push mechanism, as referred to herein, includes any mechanism that is pushed to release one of the first and second input devices 120, 122 from the storage position, to facilitate movement into the use position, and pushed to retain one of the first and second input devices 120, 122 in the storage position. When one of the first and second input devices 120, 122 is pushed from the use position to the storage position, the push-push mechanism facilitates storage of one of the first and second input devices 120, 122. A push-push mechanism is also known as a push-to-open mechanism or a push-to-open and push-to-close mechanism.

A perspective view of the portable electronic device 100 is shown in FIG. 3, in which the first input device 120 is in the use position. In the use position, the first input device 120 extends from the slot 216 in the end wall 212 of housing 202.

The movement of the first input device 120 will now be described with reference to FIG. 2 and FIG. 3. As mentioned above the first input device 120 is shown in FIG. 2 in the storage position. To release the first input device 120 from the storage position, the end 220 of the first input device 120 is pushed in a direction inwardly towards a center of the housing 202 to actuate the first push-push mechanism 400. When the first input device 120 is retained within the housing 202 in the storage position and the first push-push mechanism 400 is actuated, the first input device 120 moves from the storage position, through the slot 216 in the end wall 212 of the housing 202, to the use position in which the first input device 120 extends from the slot 216 in the end wall 210 of the housing 202, as shown in FIG. 3.

To return the first input device 120 to the storage position from the use position shown in FIG. 3, the end 220 of the first input device 120 is pushed towards the housing 202. As the end 220 of the first input device 120 is pushed towards the housing, the first input device 120 moves into the housing 202, through the slot 216 in the end wall 212 of the housing 202. When the first input device 120 reaches the storage position, the first push-push mechanism is actuated, and the first input device 120 is retained within the housing 202 in the storage position, as shown in FIG. 2.

The portable electronic device 100 may also include sensors 182 (FIG. 1) that are operatively connected to the processor 102. The sensors 152 may detect when the first input device 120 is in the use position or the storage position. When the first input device 120 is in the storage position, the first input device 120 may be locked or disabled to prevent undesired data entry. In response to detecting that the first input device 120 is in the use position, the portable electronic device 100 may enable or unlock the first input device 120 to facilitate data entry utilizing the first input device 120.

A top view of an example of the first input device assembly 402 with the housing 202 removed for the purpose of illustration is shown in FIG. 4. The first input device assembly 402 is housed within the housing 202 of the portable electronic device 100. The first input device assembly 402 includes a tray 404 and the first input device 120. The tray 404 and the first input device 120 are dimensioned such that the first input device 120 is disposed on the tray 404 and moveable relative thereto. The first input device 120 is shown in the storage position in FIG. 4.

The tray 404 includes a front surface 406, a sidewall 408, and an end wall 410. The front surface defines a pair of spaced apart slots 412, 414. The sidewall 408 includes a guide (not shown) for the first input device 120 to facilitate the movement of the first input device 120 between the storage position and the use position and vice versa. The end wall 410 acts as stop when the first input device 120 is moved into the storage position.

The first input device 120 is coupled to the tray 404 by the first push-push mechanism 400. The first input device 120 also includes a back surface (not shown) that includes a pair of spaced apart guide pins 416, 418. The guide pins 416, 418 cooperate with the pair of slots 412, 414 to guide movement of the first input device 120 relative to the tray 404.

The first push-push mechanism 400 includes a spring 420, a pin 422, and a pin follower 424. The spring 420 is coupled to the end wall 410 of the tray 404 and to the pin follower 424. The first input device 120 is connected to the pin follower 424. The pin follower 424 retains the first input device 120 in the housing 202 of the portable electronic device 100. To actuate the first push-push mechanism 400, the end 220 of the first input device 120 is pushed towards the end wall 410 of the tray 404. When force is applied to the end 220 of the first input device 120 to move the first input device relative to the tray 404 , the spring 420 compresses until the pin 422 is released and slides within a slot (not shown) in the pin follower 424, actuating the first push-push mechanism 400. When the first push-push mechanism 400 is actuated, the spring 420 decompresses and the first input surface 120 moves relative to the tray 404 from the storage position to the use position.

A perspective view of the portable electronic device 100 is shown in FIG. 6, in which the second input device 122 is in a use position. In the use position, the second input device 122 extends from the slot 218 in the sidewall 208 of housing 202.

The movement of the second input device 122 will now be described with reference to FIG. 2 and FIG. 6. As mentioned above the second input device 122 is shown in FIG. 2 in the storage position. To release the second input device 122 from within the housing 202, an end 222 of the second input device 122 is pushed in a direction towards the housing 202 to actuate the second push-push mechanism (not shown). When the second input device 122 is retained within the housing 202 in the storage position and the second push-push mechanism is actuated, the second input device 122 moves from the storage position, through the slot 218 in the sidewall 208 of the housing 202, to the use position, in which the second input device 122 extends from the slot 218, as shown in FIG. 6.

To return the second input device 122 to the storage position from the use position shown in FIG. 6, the end 222 of the second input device 122 is pushed towards the housing 202. As the end 222 of the second input device 122 is pushed inwardly towards the center of the housing 202, the second input device 122 moves through the slot 218 in the sidewall 208 of the housing 202. When the second input device 122 reaches the storage position, the second push-push mechanism (not shown) is actuated, and the second input device 122 is retained within the housing 202 in the storage position, as shown in FIG. 2.

The portable electronic device 100 may also include sensors 152 (FIG. 1) that are operatively connected to the processor 102. The sensors 152 may detect when the second input device 122 is in the use position or storage position. When the second input device 122 is in the storage position, the second input device 122 may be locked or disabled to prevent undesired data entry. In response to detecting that the second input device 122 is in the use position, the portable electronic device 100 may enable or unlock the second input device 122 to facilitate data entry utilizing the second input device 122.

The second push-push mechanism (not shown) may be similar to the first push-push mechanism 400 shown in FIG. 4 and FIG. 5 and described above, and accordingly is not described in further detail herein.

A perspective view of an example of the portable electronic device 100 is shown in FIG. 7, in which both the first input device 120 and the second input device 122 are shown in the use position. The first input device 120 extends from the slot 216 in the end wall 212 of the housing 202 and the second input device 122 extends from the slot 218 in the sidewall 208 of housing 202.

In the embodiments shown and described herein, the first input device 120 and the second input device 122 may be concealed within the housing 202 of the portable electronic device 100 when both the first input device 120 and the second input device 122 are in the storage position. The first input device 120 may be exposed for use when the first input device 120 is released from within housing 202 by actuation of the first push-push mechanism and moved to the use position. The second input device 122 may be exposed for use when the second input device is released from the housing 202 by actuation of the second push-push mechanism and moved to the use position.

In the above-described embodiments, the portable electronic device 100 includes a touch-sensitive display 118. The portable electronic device 100 may alternatively include a display without touch-sensing capabilities. For example, the portable electronic device 100 may include a liquid crystal display or a light emitting diode (LED) display.

The portable electronic device 100 described herein includes multiple input devices that may be retained within a housing 202 portable electronic device 100 and each input device may be released from within the housing 202 of the portable electronic device 100 by actuation of a push-push mechanism. The portable electronic device 100 may be used in portrait orientation with one or two extended input devices or a landscape orientation with one or two extended input devices to facilitate data entry by a user. Further, the portable electronic device 100 may be stored or utilized in a compact position when multiple input devices are retained within the housing 202 of the portable electronic device.

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A portable electronic device (100) comprising:
a housing (202) having a front (204), an end wall (212, 214) and a sidewall (208, 210);
a display (112) at the front (204) of the housing (202);
a first input device (120) moveable from a storage position within the housing (202) to a use position in which the first input device (120) extends from the end wall (212, 214);
a first push-push mechanism coupled to the housing and the first input device (120) for moving the first input device (920) between the storage position and the use position;
a second input device (122) moveable from a storage position within the housing (202) to a use position in which the second input device (122) extends from the sidewall (208, 210); and
a second push-push mechanism coupled to the housing (202) and the second input device (122) for moving the second input device (122) between the storage position and the use position.

2. The portable electronic device (100) of claim 1, wherein the display (112) comprises a touch-sensitive display (118).

3. The portable electronic device (100) of claim 1 or claim 2, comprising a processor (102) operatively coupled to the display (112), the first input device (120), and the second input device (122).

4. The portable electronic device (100) of any one of claims 1 to 3, wherein the second input device (122) is disposed between the first input device (120) and a back (206) of the housing (202) when in the storage position.

5. The portable electronic device (100) of any one of claims 1 to 4, wherein the first input device (120) is disposed between the display (112) and the second input device (122) when in the storage position.

6. The portable electronic device (100) of any one of claims 1 to 5, wherein the first input device (120) is moveable from the use position by pushing the first input device (120) to the storage position, thereby actuating the first push-push mechanism.

7. The portable electronic device (100) of any one of claim 1 to 6, wherein the second input device (122) is moveable from the use position by pushing the second input device (122) to the storage position, thereby actuating the second push-push mechanism.

8. The portable electronic device (100) of claim 3, comprising a first sensor operatively coupled to the processor (102), the first sensor configured to detect when the first input device (120) is in the use position.

9. The portable electronic device (100) of claim 8, wherein the processor (102) is configured to enable the first input device (120) in response to detecting that the first input device (120) is in the use position.

10. The portable electronic device (100) of claim 3, comprising a second sensor operatively coupled to the processor (102), the second sensor configured to detect when the second input device (122) is in the use position.

11. The portable electronic device (100) of claim 10, wherein the processor (102) is configured to enable the second input device (122) in response to detecting that the second input device (122) is in the use position.

12. The portable electronic device (100) of any one of claims 1 to 11, wherein at least one of the first input device (120) and the second input device (122) is a keyboard.

13. The portable electronic device (100) of any one of claims 1 to 11, wherein at least one of the first input device (120) and the second input device comprises at least one of a touch-sensitive input device and media inputs.

14. A method of operating a portable electronic device (100) comprising a housing (202) having an end wall (212, 214) and a sidewall (208, 210), a first input device (120) moveable from a storage position within the housing (202) to a use position in which the first input device (120) extends from the end wall (212, 214), a first push-push mechanism coupled to the housing (202) and the first input device (120) for moving the first input device (120) between the storage position and the use position, a second input device (122) moveable from a storage position within the housing (202) to a use position in which the second input device (122) extends from the sidewall (208, 210), and a second push-push mechanism coupled to the housing (202) and the second input device (122) for moving the second input device (122) between the storage position and the use position, the method comprising:
releasing the first input device (120) from the storage position and moving the first input device (120) to the use position in response to receipt of a force applied to an end of the first input device (120); and
releasing the second input device (122) from the storage position and moving the second input device (122) to the use position in response to receipt of a force applied to an end of the second input device (122).

15. The method of claim 14, comprising
activating the first input device (120) when the first input device (120) is moved from the storage position to the use position; and
activating the second input device (122) when the second input device (122) is moved from the storage position to the use position.

## Amended claims

### Amended claims in accordance with Rule 137(2) EPC.

**1.** A portable electronic device (100) comprising:
a housing (202) having a front (204), an end wall (212, 214) and a sidewall (208, 210);
a display (112) at the front (204) of the housing (202);
a first input device (120) moveable from a storage position within the housing (202) to a use position in which the first input device (120) extends from the end wall (212, 214), wherein the first input device (120) comprises a full keyboard or a reduced keyboard;
a first push-push mechanism coupled to the housing and the first input device (120) for moving the first input device (120) between the storage position and the use position;
a second input device (122) moveable from a storage position within the housing (202) to a use position in which the second input device (122) extends from the sidewall (208, 210), wherein the second input device (122) comprises a full keyboard; and
a second push-push mechanism coupled to the housing (202) and the second input device (122) for moving the second input device (122) between the storage position and the use position.

**2.** The portable electronic device (100) of claim 1, wherein the display (112) comprises a touch-sensitive display (118).

**3.** The portable electronic device (100) of claim 1 or claim 2, comprising a processor (102) operatively coupled to the display (112), the first input device (120), and the second input device (122).

**4.** The portable electronic device (100) of any one of claims 1 to 3, wherein the second input device (122) is disposed between the first input device (120) and a back (206) of the housing (202) when in the storage position.

**5.** The portable electronic device (100) of any one of claims 1 to 4, wherein the first input device (120) is disposed between the display (112) and the second input device (122) when in the storage position.

**6.** The portable electronic device (100) of any one of claims 1 to 5, wherein the first input device (120) is moveable from the use position by pushing the first input device (120) to the storage position, thereby actuating the first push-push mechanism.

**7.** The portable electronic device (100) of any one of claims 1 to 6, wherein the second input device (122) is moveable from the use position by pushing the second input device (122) to the storage position, thereby actuating the second push-push mechanism.

**8.** The portable electronic device (100) of claim 3, comprising a first sensor operatively coupled to the processor (102), the first sensor configured to detect when the first input device (120) is in the use position.

**9.** The portable electronic device (100) of claim 8, wherein the processor (102) is configured to enable the first input device (120) in response to detecting that the first input device (120) is in the use position.

**10.** The portable electronic device (100) of claim 3, comprising a second sensor operatively coupled to the processor (102), the second sensor configured to detect when the second input device (122) is in the use position.

**11.** The portable electronic device (100) of claim 10, wherein the processor (102) is configured to enable the second input device (122) in response to detecting that the second input device (122) is in the use position.

**12.** A method of operating a portable electronic device (100) comprising a housing (202) having an end wall (212, 214) and a sidewall (208, 210), a first input device (120) moveable from a storage position within the housing (202) to a use position in which the first input device (120) extends from the end wall (212, 214), wherein the first input device (120) comprises a full keyboard or a reduced keyboard, a first push-push mechanism coupled to the housing (202) and the first input device (120) for moving the first input device (120) between the storage position and the use position, a second input device (122) moveable from a storage position within the housing (202) to a use position in which the second input device (122) extends from the sidewall (208, 210), wherein the second input device (122) comprises a full keyboard, and a second push-push mechanism coupled to the housing (202) and the second input device (122) for moving the second input device (122) between the storage position and the use position, the method comprising:
releasing the first input device (120) from the storage position and moving the first input device (120) to the use position in response to receipt of a force applied to an end of the first input device (120); and
releasing the second input device (122) from the storage position and moving the second input device (122) to the use position in response to receipt of a force applied to an end of the second input device (122).

**13.** The method of claim 12, further comprising
activating the first input device (120) when the first input device (120) is moved from the storage position to the use position; and
activating the second input device (122) when the second input device (122) is moved from the storage position to the use position.
